# EUROPEAN PATENT APPLICATION

(11) **EP 4 571 924 A1**
(43) Date of publication of application: **18.06.2025**
(21) Application number: 24785177.7
(22) Date of filing: 02.04.2024
(51) Int. Cl.: H01M 10/0567, H01M 4/38, H01M 10/0569

(54) **ELECTROLYTE FOR LITHIUM-SULFUR BATTERY AND LITHIUM-SULFUR BATTERY CONTAINING SAME**

(30) Priority: 07.04.2023 KR 20230046347
(71) Applicant: LG Energy Solution, Ltd., Seoul 07335 (KR); Korea Advanced Institute of Science and Technology, Daejeon 34141 (KR)
(72) Inventor: PARK, Seong-Hyo, Daejeon 34122 (KR); KIM, Hee-Tak, Daejeon 34141 (KR); LEE, Chang-Hoon, Daejeon 34122 (KR); JUNG, Jin-Kwan, Daejeon 34141 (KR); CHO, Hye-Nah, Daejeon 34141 (KR)
(74) Representative: Goddar, Heinz J.
(86) International application number: PCT/KR2024/004261
(87) International publication number: WO 2024/210472

(57) **Abstract**

The present disclosure relates to an electrolyte solution for use in a lithium-sulfur battery, and includes a Lewis acidic additive including a cation having higher Lewis acidity than a lithium ion. It is possible to suppress polysulfide dissolution in the electrolyte solution and improve ionic conductivity of the electrolyte solution and sulfur utilization, thereby achieving stable operation of the lithium-sulfur battery with lean electrolyte and high capacity.

## Description

### TECHNICAL FIELD

The present disclosure an electrolyte solution for a lithium-sulfur battery and a lithium-sulfur battery including the same.

The present application claims priority to Korean Patent Application No. 2023-0046347 filed on April 7, 2023 in the Republic of Korea, the disclosure of which is incorporated herein by reference.

### BACKGROUND

A lithium-sulfur battery is a battery system using a sulfur-based material having a sulfur-sulfur (S-S) bond as a positive electrode active material and a lithium metal as a negative electrode active material. Sulfur, a main component of the positive electrode active material, is abundant in nature and can be found around the world, is non-toxic, and has low atomic weight.

As secondary batteries are used in a wide range of applications including electric vehicles (EVs) and energy storage systems (ESSs), attention is drawn to lithium-sulfur battery technology that achieves theoretically higher energy storage density by weight (~2,600 Wh/kg) than lithium-ion secondary batteries having lower energy storage density by weight (~250 Wh/kg).

During discharging, lithium-sulfur batteries undergo oxidation at the negative electrode active material, lithium, by releasing electrons into lithium cation, and reduction at the positive electrode active material, the sulfur-based material, by accepting electrons. Through the reduction reaction, the sulfur-based material is converted to sulfur anion by the S-S bond accepting two electrons. The lithium cation produced by the oxidation reaction of lithium migrates to the positive electrode via an electrolyte, and bonds with the sulfur anion produced by the reduction reaction of the sulfur-based compound to form a salt. Specifically, sulfur before the discharge has a cyclic S₈ structure, and it is converted to lithium polysulfide (LiSx) by the reduction reaction and is completely reduced to lithium sulfide (Li₂S).

In this instance, due to accumulation of the lithium sulfide on the electrode surface of the lithium-sulfur batteries, the lithium-sulfur batteries have lower discharge capacity than the theoretical capacity. In particular, to commercialize lithium-sulfur batteries, in the condition in which the amount of lithium salt in electrolytes or the amount of electrolyte solution used in batteries is reduced, side reactions of lithium polysulfide at the lithium negative electrode continuously occur, causing corrosion of the negative electrode and life performance degradation.

Specifically, as the amount of electrolyte solution used in batteries is lower, the concentration of lithium polysulfide dissolved in the electrolyte solution sharply increases and reaches a saturated concentration. In this case, due to high concentration of lithium polysulfide in the electrolyte solution, the lithium negative electrode continuously cause side reactions that aggravate corrosion. Additionally, as a smaller amount of electrolyte solution is used, one of persistent problems of lithium-sulfur batteries, severer shuttle effects occur, causing active material loss and battery performance degradation.

To solve this problem, many studies have been made on high concentrations of lithium salts at which most of solvent molecules are involved in the solvation shell, leading to low activity of the solvent and low solubility of polysulfide. It has been reported that when the concentration of lithium salt increases, the volatility of the electrolyte solution decreases, and the transport of lithium ions improves, leading to high battery performance in lean electrolyte condition. However, there are reports that high price and low ionic conductivity make it difficult to commercialize and operate at high current.

Accordingly, there is a continued demand for lithium-sulfur batteries that suppress polysulfide dissolution, improve ionic conductivity of electrolyte solutions, maintain sulfur utilization at the positive electrode and stably operate in lean electrolyte and high-sulfur loading conditions.

### SUMMARY

### Technical Problem

The present disclosure is designed to overcome passivation caused by the accumulation of lithium sulfide on electrodes used in lithium-sulfur batteries.

To this end, an aspect of the present disclosure is directed to providing an electrolyte solution for a lithium-sulfur battery for suppressing the dissociation of lithium polysulfide in an electrolyte solution.

Additionally, an aspect of the present disclosure is directed to providing an electrolyte solution for a lithium-sulfur battery with lower lithium salt concentration and higher ionic conductivity.

Furthermore, another aspect of the present disclosure is directed to providing a lithium-sulfur battery with lower electrolyte content and higher sulfur loading.

### Technical Solution

To solve the above-described problem, according to an aspect of the present disclosure, there is provided an electrolyte solution for a lithium-sulfur battery of the following embodiments.

The electrolyte solution for the lithium-sulfur battery according to a first embodiment includes a lithium salt, a nitric acid compound, a nonaqueous solvent and a Lewis acidic additive, wherein the Lewis acidic additive is a salt including a cation having higher Lewis acidity than a lithium ion (Li⁺), and wherein a total concentration of the lithium salt, the nitric acid compound and the Lewis acidic additive is 2 M or less.

According to a second embodiment, in the first embodiment, the total concentration of the lithium salt, the nitric acid compound and the Lewis acidic additive may be 1.5 M or less.

According to a third embodiment, in the first or second embodiment, the Lewis acidic additive may include, as the cation, an aluminum (Al) ion, a magnesium (Mg) ion, a calcium (Ca) ion, a strontium (Sr) ion, a barium (Ba) ion or two or more of them.

According to a fourth embodiment, in any one of the first to third embodiments, the Lewis acidic additive may include a calcium salt.

According to a fifth embodiment, in any one of the first to fourth embodiments, the Lewis acidic additive may include an anion including fluorine.

According to a sixth embodiment, in any one of the first to fifth embodiments, the Lewis acidic additive may include, as an anion, F⁻, BF₄⁻, PF₆⁻, CF₃SO₃⁻, [(CF₃SO₂)₂N]⁻, [(FSO₂)₂N]⁻ or two or more of them.

According to a seventh embodiment, in any one of the first to sixth embodiments, a concentration of the lithium salt in the electrolyte solution for the lithium-sulfur battery may be 2 M or less.

According to an eighth embodiment, in any one of the first to seventh embodiments, a concentration of the Lewis acidic additive in the electrolyte solution for the lithium-sulfur battery may be 0.3 M or less.

According to a ninth embodiment, in any one of the first to eighth embodiments, a concentration of the Lewis acidic additive in the electrolyte solution for the lithium-sulfur battery may be from 0.01 M to 0.1 M.

According to a tenth embodiment, in any one of the first to ninth embodiments, the nonaqueous solvent may include an ether-based solvent.

According to an eleventh embodiment, in any one of the first to tenth embodiments, the nonaqueous solvent may include an ether-based solvent, and a volume of the ether-based solvent may be 60 vol% or more of a total volume of the nonaqueous solvent.

According to a twelfth embodiment, in any one of the first to eleventh embodiments, the nonaqueous solvent may consist of one type of ether-based solvent.

According to a thirteenth embodiment, in any one of the first to twelfth embodiments, the nonaqueous solvent may include a cyclic ether and an acyclic ether.

According to another aspect of the present disclosure, there is provided a lithium-sulfur battery of the following embodiments.

The lithium-sulfur battery according to a fourteenth embodiment includes the electrolyte solution according to any one of the first to thirteenth embodiments, a positive electrode including inorganic sulfur (S₈), a negative electrode, and a separator between the positive electrode and the negative electrode.

According to a fifteenth embodiment, in the fourteenth embodiment, the lithium-sulfur battery may have a solid electrolyte interphase (SEI) layer including LiF on the negative electrode.

According to a sixteenth embodiment, in athe fourteenth or fifteenth embodiments, an electrolyte/sulfur (El/S) ratio may be 7 µℓ/mg or less.

### Advantageous Effects

The electrolyte solution for the lithium-sulfur battery according to an embodiment of the present disclosure may overcome passivation caused by the accumulation of lithium sulfide on the negative electrode of the lithium-sulfur battery, thereby improving the operational stability of the lithium-sulfur battery.

Additionally, the stable interface having high fluorine content on the negative electrode of the lithium-sulfur battery may induce uniform lithium deposition and suppress electrolyte decomposition. Accordingly, it may be possible to achieve higher Coulombic efficiency and longer life of the lithium-sulfur battery.

### BRIEF DESCRIPTION OF THE DRAWINGS

The accompanying drawings illustrate exemplary embodiments of the present disclosure and together with the foregoing description, serve to provide a further understanding of the technical aspect of the present disclosure, and thus the present disclosure should not be construed as being limited to the accompanying drawings.
FIG. 1 shows life characteristics evaluation results of lithium-sulfur batteries using electrolyte solutions of Comparative Example 1, Example 1 and Example 2 in the specification.
FIG. 2 shows rate performance evaluation results as a function of charge/discharge cycle in lithium-sulfur batteries using electrolyte solutions of Comparative Example 1 to Comparative Example 4, Example 1 and Example 2 in the specification.
FIG. 3 shows elemental analysis results of SEI layers on negative electrodes of lithium-sulfur batteries using electrolyte solutions of Comparative Example 1 (w/o Ca(OTF)₂) and Example 1 (w/ Ca(OTF)₂) in the specification.
FIG. 4 shows elemental analysis results of SEI layers on negative electrodes of lithium-sulfur batteries using electrolyte solutions of Comparative Example 1 and Example 1 in the specification.
FIG. 5 shows current measurement results by the shuttle effect using electrolyte solutions of Comparative Example 1 and Example 1 in the specification.
FIG. 6 shows electrolyte decomposition analysis evaluation results using electrolyte solutions of Comparative Example 1 and Example 1 in the specification.
FIG. 7 shows life characteristics evaluation results of lithium-sulfur batteries using electrolyte solutions of Comparative Example 1, Comparative Example 5, Comparative Example 6 and Example 1 to Example 3 in the specification.
FIG. 8 shows specific capacity evaluation results as a function of charge/discharge cycle in lithium-sulfur batteries using electrolyte solutions of Example 4 and Comparative Example 7 in the specification.
FIG. 9 shows a charge/discharge curve of the first charge/discharge cycle in a lithium-sulfur battery using an electrolyte solution of Comparative Example 8 in the specification.
FIG. 10 shows specific capacity evaluation results as a function of charge/discharge cycle in a lithium-sulfur battery using an electrolyte solution of Example 5 in the specification.

### DETAILED DESCRIPTION

Hereinafter, the present disclosure will be described in more detail.

It should be understood that the terms or words used in the specification and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

The term "comprise" when used in this specification, specifies the presence of stated elements, but does not preclude the presence or addition of one or more other elements, unless the context clearly indicates otherwise.

Additionally, the terms "about" and "substantially" as used herein are used in the sense of at, or nearly at, when given the manufacturing and material tolerances inherent in the stated circumstances, and are used to prevent the unscrupulous infringer from unfairly taking advantage of the present disclosure where exact or absolute figures are stated as an aid to understanding the present disclosure.

Throughout the specification, "A and/or B" refers to either A or B or both.

The term "polysulfide" as used herein is the concept that covers "polysulfide ion (Sx²⁻, 1<x≤8))" and "lithium polysulfide (Li₂Sx or LiSx⁻, 1<x≤8)".

The present disclosure relates to an electrolyte solution for a lithium-sulfur battery and a lithium-sulfur battery including the same.

The electrolyte solution for the lithium-sulfur battery according to an aspect of the present disclosure includes a lithium salt, a nitric acid compound, a nonaqueous solvent and a Lewis acidic additive. In particular, the total concentration of the lithium salt, the nitric acid compound and the Lewis acidic additive is 2 M or less.

The 'Lewis acidic additive' as used herein is defined as a salt including a cation having higher Lewis acidity than a lithium ion (Li⁺).

The definition of acids and bases proposed by Gilbert Newton Lewis is known. According to the definition, a material may be classified into a Lewis acid or a Lewis base. Specifically, the 'Lewis base' may be defined as a material that donates an unshared electron pair to the Lewis acid, and the 'Lewis acid' may be a defined as a material that accepts an unshared electron pair from the Lewis base.

More specifically, the Lewis acid refers collectively to as a chemical species that contains an empty orbital which is capable of accepting an electron pair from the Lewis base to form a Lewis adduct, and the Lewis base refers collectively to as a chemical species that has a filled orbital containing an electron pair which may form a chemical bond with the Lewis acid to form a Lewis adduct.

In the specification, the 'Lewis acidity' is a quantitative measure of the acceptance of the unshared electron pair, and may be measured by known methods for measuring the Lewis acidity. Accordingly, the "higher Lewis acidity" refers to higher ability to accept the unshared electron pair, and for example, may represent a lower energy level of the empty orbital which is capable of accepting the unshared electron pair.

According to an embodiment of the present disclosure, because the Lewis acidic additive is a salt including a cation having higher Lewis acidity than a lithium ion (Li⁺), when the electrolyte solution for the lithium-sulfur battery includes the Lewis acidic additive, it may be possible to suppress decomposition of the lithium salt by the electron (e⁻) present in the electrolyte solution during operation of the lithium-sulfur battery. Accordingly, it may be possible to provide the electrolyte solution with low lithium salt content and high ionic conductivity during operation of the lithium-sulfur battery, but the mechanism of the present disclosure is not limited thereto.

In an embodiment of the present disclosure, the Lewis acidity between the cation of the Lewis acidic additive and the lithium ion (Li⁺) may be, for example, determined through comparison of acid dissociation constant (Ka) of the conjugate base of each of the cation and the lithium ion. The method for comparing the acidity through comparison of acid dissociation constant is well known, and the smaller pKa (-logKa), the stronger the acid.

In an embodiment of the present disclosure, when the cation is expressed as M⁺, the Lewis acidity between the cation and the lithium ion may be compared through comparison between the pKa value of MH that is the conjugate base of the cation and the pKa value of the conjugate base (LiH) of the lithium ion (Li⁺).

Specifically, in an embodiment of the present disclosure, the Lewis acidic additive may include the cation having the conjugate base having a larger pKa value than the pKa value of LiH that is the conjugate base of the lithium ion.

In an embodiment of the present disclosure, the Lewis acidic additive may include, as the cation, an aluminum (Al) ion, a magnesium (Mg) ion, a calcium (Ca) ion, a strontium (Sr) ion, a barium (Ba) ion or two or more of them.

In an embodiment of the present disclosure, the Lewis acidic additive may include a calcium ion as the cation. Specifically, the Lewis acidic additive may include a calcium salt.

In another embodiment of the present disclosure, the Lewis acidic additive may be a salt including a known anion for the cation. The anion is not limited to a particular one and may include those that do not hinder the objective of the present disclosure when included in the electrolyte solution.

In an embodiment of the present disclosure, the anion of the Lewis acidic additive may include, for example, halide, alkyl, alkoxide, aryl, aryloxide, alkylate, cyclopentadienyl, acetylacetonate, amide, sulfonate, sulfate, borate, aluminate, aluminoxide, phosphate, arsenide, imide or two or more of them, but is not limited thereto.

In an embodiment of the present disclosure, the anion of the Lewis acidic additive may include at least one selected from the group consisting of F⁻, Cl⁻, Br⁻, I⁻, R⁻, RO⁻, cyclopentadienyl (Cp), pentamethylcyclopentadienyl, R₂N⁻, acetylacetonate (acac), hexafluoro acetylacetonate (hfac), CF₃SO₂O⁻(-OTf), RSO₂O⁻, ROSO₂O⁻, BF₄⁻, BR₄⁻, AlCl₄⁻, PF₆⁻, PR₃F₃⁻, AsF₆⁻, NO₃⁻ and SO₄⁻, but is not limited thereto. Here, R denotes alkyl, cycloalkyl, aryl, alkoxy, aryloxy, haloalkyl, haloalkoxy or a polymer.

In another embodiment of the present disclosure, the anion of the Lewis acidic additive may include the element fluorine. When the Lewis acidic additive includes an anion including the element fluorine as the anion, it may be possible to form a Solid Electrolyte Interphase (SEI) layer quickly on the negative electrode surface. In particular, when the Lewis acidic additive includes the anion including the element fluorine as the anion, the element fluorine is present in the electrolyte solution including the Lewis acidic additive, and the SEI layer including the element fluorine may be formed on the negative electrode surface during operation of the lithium-sulfur battery using the same. When the SEI layer including the element fluorine is formed on the negative electrode surface of the lithium-sulfur battery, it may be possible to induce uniform deposition of lithium on the negative electrode during operation of the lithium-sulfur battery and mitigate degradation of the negative electrode, but the present disclosure is not limited thereto.

According to another embodiment of the present disclosure, the Lewis acidic additive may include, as the anion, either an anion consisting of fluoride (F⁻) or an anion including at least one element fluorine and further including a different type of element, or both.

In another embodiment of the present disclosure, the Lewis acidic additive may include, as the anion, for example, F⁻, BF₄⁻, PF₆⁻, CF₃SO₃⁻ (OTF⁻), [(CF₃SO₂)₂N]⁻ (TFSI⁻), [(FSO₂)₂N]⁻ (FSI⁻) or two or more of them, but the present disclosure is not limited thereto.

In another embodiment of the present disclosure, the Lewis acidic additive may include, for example, AlF₃, Al(BF₄)₃, Al(PF₆)₃, Al(CF₃SO₃)₃, Al[(CF₃SO₂)₂N]₃, Al[(FSO₂)₂N]₃, MgF₂, Mg(BF₄)₂, Mg(PF₆)₂, Mg(CF₃SO₃)₂, Mg[(CF₃SO₂)₂N]₂, Mg[(FSO₂)₂N]₂, CaF₂, Ca(BF₄)₂, Ca(PF₆)₂, Ca(CF₃SO₃)₂, Ca[(CF₃SO₂)₂N]₂, Ca[(FSO₂)₂N]₂, SrF₂, Sr(BF₄)₂, Sr(PF₆)₂, Sr(CF₃SO₃)₂, Sr[(CF₃SO₂)₂N]₂, Sr[(FSO₂)₂N]₂ or two or more of them, but is not limited thereto.

In another embodiment of the present disclosure, the Lewis acidic additive may include Ca(CF₃SO₃)₂.

In an embodiment of the present disclosure, the lithium salt is not limited to a particular one and may include those that are used as the electrolyte in the electrolyte solution of the lithium-sulfur battery. The lithium salt may include, for example, LiCl, LiBr, LiI, LiClO₄, LiBF₄, LiB₁₀Cl₁₀, LiPF₆, LiCF₃SO₃, LiCF₃CO₂, LiC₄BO₈, LiAsF₆, LiSbF₆, LiAlCl₄, CH₃SO₃Li, CF₃SO₃Li, (CF₃SO₂)₂NLi, (C₂F₅SO₂)₂NLi, (SO₂F)₂NLi, (CF₃SO₂)₃CLi, lithium chloroborane, lower aliphatic lithium carboxylate, lithium tetraphenylborate, lithium imide or two or more of them, but is not limited thereto.

In an embodiment of the present disclosure, the lithium salt may include (CF₃SO₂)₂NLi (LiFSI).

In an embodiment of the present disclosure, the nitric acid compound refers collectively to nitric acid-based compounds or nitrous acid-based compounds that may be used as an additive in the electrolyte solution for the lithium-sulfur battery. The nitric acid- or nitrous acid-based compound may form a stable film on the negative electrode made of for example, lithium metal and improve charge/discharge efficiency, but the mechanism of the present disclosure is not limited thereto.

In an embodiment of the present disclosure, the nitric acid compound may include, for example, but is not limited to, an inorganic nitric acid or nitrous acid compound such as lithium nitrate (LiNO₃), potassium nitrate (KNO₃), cesium nitrate (CsNO₃), barium nitrate (Ba(NO₃)₂), ammonium nitrate (NH₄NO₃), lithium nitrite (LiNO₂), potassium nitrite (KNO₃), cesium nitrite (CsNO₂), ammonium nitrite (NH₄NO₂); an organic nitric acid or nitrous acid compound such as methyl nitrate, a dialkyl imidazolium nitrate, guanidine nitrate, imidazolium nitrate, pyridinium nitrate, ethyl nitrite, propyl nitrite, butyl nitrite, pentyl nitrite, octyl nitrite; an organic nitro compound such as nitromethane, nitropropane, nitrobutane, nitrobenzene, dinitrobenzene, nitropyridine, dinitropyridine, nitrotoluene, dinitrotoluene, or a mixture thereof.

In an embodiment of the present disclosure, the cation of the nitric acid compound may be selected from alkali metals, for example, lithium, sodium, potassium, rubidium and cesium, but is not limited thereto.

In another embodiment of the present disclosure, the nitric acid compound may include lithium nitrate (LiNO₃).

As described above, according to an embodiment of the present disclosure, it may be possible to reduce the total salt content in the electrolyte solution and improve ionic conductivity by the Lewis acidic additive.

According to an aspect of the present disclosure, the electrolyte solution for the lithium-sulfur battery includes, as a salt, the lithium salt, the nitric acid compound and the Lewis acidic additive.

Accordingly, according to an aspect of the present disclosure, the total concentration of the lithium salt, the nitric acid compound and the Lewis acidic additive in the electrolyte solution for the lithium-sulfur battery is 2 M or less.

Specifically, according to an embodiment of the present disclosure, the total concentration of the lithium salt, the nitric acid compound and the Lewis acidic additive in the electrolyte solution for the lithium-sulfur battery may be, for example, 1.8 M or less, 1.75 M or less, 1.70 M or less, 1.65 M or less, 1.60 M or less, 1.55 M or less, 1.50 M or less, 1.45 M or less, 1.40 M or less, 1.35 M or less, 1.30 M or less, 1.25 M or less, or 1.20 M or less. More specifically, the total concentration of the lithium salt, the nitric acid compound and the Lewis acidic additive in the electrolyte solution for the lithium-sulfur battery may be, for example, 0.5 M or more, 0.8 M or more, or 1 M or more.

In an embodiment of the present disclosure, the total concentration of the lithium salt, the nitric acid compound and the Lewis acidic additive in the electrolyte solution for the lithium-sulfur battery may be, for example, from 0.5 M to 2 M, and specifically from 0.8 M to 1.8 M, from 1 M to 1.5 M, from 1 M to 1.3 M, from 1M to 1.25 M or from 1.20 M to 1.25 M. According to an aspect of the present disclosure, when the lithium salt, the nitric acid compound and the Lewis acidic additive are included at the aforementioned concentration, this may have a beneficial effect on low electrolyte in the electrolyte solution and long life of the lithium-sulfur battery, but the present disclosure is not limited thereto.

In an embodiment of the present disclosure, in addition to the lithium salt, the nitric acid compound and the Lewis acidic additive, the electrolyte solution for the lithium-sulfur battery may further include a salt compound without hindering the objective of the present disclosure.

In an embodiment of the present disclosure, in addition to the lithium salt, the nitric acid compound and the Lewis acidic additive, when the electrolyte solution for the lithium-sulfur battery further includes a salt compound, the total salt concentration of the electrolyte solution for the lithium-sulfur battery may be preferably 2.5 M or less, specifically 2 M or less.

In another embodiment of the present disclosure, the electrolyte solution for the lithium-sulfur battery may not include any salt compound other than the lithium salt, the nitric acid compound and the Lewis acidic additive. Accordingly, in this case, the total salt concentration in the electrolyte solution for the lithium-sulfur battery may be the sum of concentrations of the lithium salt, the nitric acid compound and the Lewis acidic additive.

Specifically, according to an embodiment of the present disclosure, the total salt concentration in the electrolyte solution for the lithium-sulfur battery may be, for example, 2 M or less or 1.5 M or less. More specifically, the salt concentration in the electrolyte solution for the lithium-sulfur battery may be, for example, from 0.1 M to 2.5 M, from 0.5 M to 2 M, from 0.5 M to 1.5 M, from 1 M to 1.25 M, from 1 M to 1.20 M or from 1.20 M to 1.25 M. According to an embodiment of the present disclosure, when the salt concentration lies in the aforementioned range, it may be possible to suppress decomposition of the lithium salt during operation of the battery, thereby improving ionic conductivity and battery life, but the present disclosure is not limited thereto.

In an embodiment of the present disclosure, the concentration of the lithium salt in the electrolyte solution for the lithium-sulfur battery may be, for example, 2 M or less. Specifically, the concentration of the lithium salt in the electrolyte solution for the lithium-sulfur battery may be, for example, 1.8 M or less, 1.5 M or less, or 1 M or less. Specifically, within the aforementioned range, the concentration of the lithium salt in the electrolyte solution for the lithium-sulfur battery may be, for example, 0.05 M or more, 0.1 M or more, 0.5 M or more, or 0.6 M or more. More specifically, the concentration of the lithium salt in the electrolyte solution for the lithium-sulfur battery may be, for example, from 0.05 M to 2M, from 0.1 M to 1.75 M, from 0.5 M to 1.5 M, from 0.5 M to 1.25 M, from 0.5 M to 1.0 M, from 0.5 M to 0.8 M, from 0.5 M to 0.75 M, from 0.6 M to 0.8 M, or from 0.75 M to 1.0 M.

In an embodiment of the present disclosure, the concentration of the Lewis acidic additive in the electrolyte solution for the lithium-sulfur battery may be, for example, 0.3 M or less, 0.2 M or less, or 0.1 M or less. Specifically, the concentration of the Lewis acidic additive in the electrolyte solution for the lithium-sulfur battery may be from 0.01 M to 0.3 M, from 0.01 M to 0.2 M, from 0.01 M to 0.1 M, from 0.03 M to 0.2 M, from 0.04 M to 0.1 M, from 0.04 M to 0.075 M, or from 0.05 M to 0.075 M.

In an embodiment of the present disclosure, the concentration of the nitric acid compound in the electrolyte solution for the lithium-sulfur battery may be, for example, 1 M or less or 0.5 M or less. Specifically, the concentration of the nitric acid compound in the electrolyte solution for the lithium-sulfur battery may be from 0.05 M to 1 M, from 0.1 M to 0.8 M, from 0.2 M to 0.6 M, from 0.3 M to 0.5 M, or from 0.4 M to 0.5 M.

In an embodiment of the present disclosure, the nonaqueous solvent may include those that are used in the electrolyte solution of the lithium-sulfur battery without limitation. For example, the nonaqueous solvent may include an ether-based solvent, an ester-based solvent, an amide-based solvent, a carbonate-based solvent or a mixture thereof.

In an embodiment of the present disclosure, the ether-based solvent may include those that are used in the electrolyte solution of the lithium-sulfur battery without limitation.

In another embodiment of the present disclosure, the ether-based solvent may be, for example, classified into a cyclic ether and an acyclic ether according to the structure.

In an embodiment of the present disclosure, the acyclic ether may include, for example, dimethoxy ethane, diethoxy ethane, ethylene glycol ethyl methyl ether, diethylene glycol dimethyl ether, diethylene glycol diethyl ether, diethylene glycol methyl ethyl ether, triethylene glycol dimethyl ether, triethylene glycol diethyl ether, triethylene glycol methyl ethyl ether, tetraethylene glycol dimethyl ether, tetraethylene glycol diethyl ether, tetraethylene glycol methyl ethyl ether, polyethylene glycol dimethyl ether, polyethylene glycol diethyl ether, polyethylene glycol methyl ethyl ether, bis(2,2,2-trifluoroethyl)ether, methyl propyl ether, ethyl propyl ether, dipropyl ether, methyl t-butyl ether, methyl hexyl ether, ethyl t-butyl ether, ethyl hexyl ether, or a mixture thereof.

In an embodiment of the present disclosure, the cyclic ether may include, for example, furan, 2-methyl furan, 3-methyl furan, 2-ethylfuran, 2-propylfuran, 2-butylfuran, 2,3-dimethylfuran, 2,4-dimethylfuran, 2,5-dimethylfuran, pyran, 2-methylpyran, 3-methylpyran, 4-methylpyran, benzofuran, 2-(2-nitrovinyl)furan, thiophene, 2-methylthiophene, 2-ethylthiophene, 2-propylthiophene, 2-butylthiophene, 2,3-dimethylthiophene, 2,4-dimethylthiophene, 2,5-dimethylthiophene, or a mixture thereof.

In an embodiment of the present disclosure, the ester-based solvent may include, for example, any one selected from the group consisting of methyl acetate, ethyl acetate, propyl acetate, methyl propionate, ethyl propionate, propyl propionate, γ-butyrolactone, γ-valerolactone, γ-caprolactone, σ-valerolactone and ε-caprolactone or a mixture thereof, but is not limited thereto.

In an embodiment of the present disclosure, the carbonate-based solvent may include, for example, dimethyl carbonate, diethyl carbonate, dipropyl carbonate, ethylmethyl carbonate, methylpropyl carbonate, ethylpropyl carbonate, ethylene carbonate, propylene carbonate, 1,2-butylene carbonate, 2,3-butylene carbonate, 1,2-pentylene carbonate, 2,3-pentylene carbonate, vinylene carbonate, vinylethylene carbonate and a halide thereof, or a mixture thereof. The halide may include, for example, fluoroethylene carbonate, but is not limited thereto.

In another embodiment of the present disclosure, because the carbonate-based solvent does not dissolve the nitric acid compound or has low solubility, the nonaqueous solvent may not substantially include the carbonate-based solvent.

In an embodiment of the present disclosure, the nonaqueous solvent may include the carbonate-based solvent in an amount that is too small to affect the solubility of the nitric acid compound, and when the nonaqueous solvent includes, for example, the carbonate-based solvent, the amount of the carbonate-based solvent may be 3 wt% or less, 2 wt% or less, 1 wt% or less, 0.5 wt% or less, or 0 wt% (i.e., none) based on the total weight of the electrolyte solution for the lithium-sulfur battery.

In an embodiment of the present disclosure, as described above, the Lewis acidic additive may suppress the dissolution of lithium polysulfide, thereby achieving the outstanding lithium-sulfur battery without using a nonsolvent for lithium polysulfide. From this perspective, the nonaqueous solvent may include the ether-based solvent.

In an embodiment of the present disclosure, the nonaqueous solvent may include the ether-based solvent more than half of the total volume of the nonaqueous solvent. Specifically, the volume of the ether-based solvent may be 50 vol% or more, specifically 60 vol% or more, more specifically, from 70 vol% to 100 vol%, from 80 vol% to 100 vol%, from 85 vol% to 100 vol%, from 90 vol% to 100 vol%, or from 95 vol% to 100 vol% based on the total volume of the nonaqueous solvent.

In another embodiment of the present disclosure, the nonaqueous solvent may consist of one type of ether-based solvent.

According to an embodiment of the present disclosure, the nonaqueous solvent may consist of the acyclic ether. For example, the nonaqueous solvent may include 100 vol% of the acyclic ether based on the total volume.

More specifically, in an embodiment of the present disclosure, the nonaqueous solvent may include dimethoxy ethane (DME) as the ether-based solvent, and the volume of the DME may be 60 vol% or more, more specifically from 70 vol% to 100 vol%, from 80 vol% to 100 vol%, from 85 vol% to 100 vol%, from 90 vol% to 100 vol%, or from 95 vol% to 100 vol% based on the total volume of the nonaqueous solvent.

In another embodiment of the present disclosure, the nonaqueous solvent may include the cyclic ether and the acyclic ether. For example, the nonaqueous solvent may include a mixture of 2-methyl furan (2-MeF) as the cyclic ether and dimethoxy ethane (DME) as the acyclic ether.

According to an embodiment of the present disclosure, when the nonaqueous solvent includes the cyclic ether and the acyclic ether, the cyclic ether and the acyclic ether may be, for example, included at a volume ratio of from 5:1 to 1:5, from 4:1 to 1:4, from 3:1 to 1:3, from 2:1 to 1:2 or 1:1, but the present disclosure is not limited thereto.

Using the composition of the electrolyte solution for the lithium-sulfur battery according to an aspect of the present disclosure, it may be possible to suppress the dissolution of lithium polysulfide and passivation caused by deposition of lithium sulfide on the negative electrode, thereby improving operational stability of the lithium-sulfur battery, but the present disclosure is not limited thereto.

According to another aspect of the present disclosure, there is provided a lithium-sulfur battery including the above-described electrolyte solution for the lithium-sulfur battery.

The lithium-sulfur battery includes the electrolyte solution for the lithium-sulfur battery of the above-described composition, a positive electrode, a negative electrode and a separator between the positive electrode and the negative electrode.

Here, the positive electrode may include inorganic sulfur (S₈) as a positive electrode active material. Specifically, besides the inorganic sulfur, the positive electrode may include a sulfur-containing compound as the positive electrode active material, and in this instance, the sulfur-containing compound may include at least one selected from the group consisting of Li₂Sn (n≥1), disulfide compounds, organic sulfur compounds and carbon-sulfur polymer ((C₂Sₓ)ₙ, x=2.5 to 50, n≥2).

In an embodiment of the present disclosure, the positive electrode, the negative electrode and the separator may include those that may be used in the lithium-sulfur battery without limitation, and in the specification, a description of the corresponding components is omitted. Additionally, the lithium-sulfur battery is not limited to a particular shape and may come in various shapes, for example, cylindrical, stack-type, coin-type and so on.

As described above, the lithium-sulfur battery includes the electrolyte solution including the Lewis acidic additive. According to an embodiment of the present disclosure, the Lewis acidic additive may include the element fluorine as the anion. During initial charge of the lithium-sulfur battery, the SEI layer may be formed on the negative electrode, and according to an embodiment of the present disclosure, when the element fluorine is included as the anion of the Lewis acidic additive, the lithium-sulfur battery may have the SEI layer including the element fluorine on the negative electrode during initial charge.

Specifically, according to an embodiment of the present disclosure, the lithium-sulfur battery may have the SEI layer including LiF on the negative electrode during initial charge.

According to an embodiment of the present disclosure, when the lithium-sulfur battery includes the above-described electrolyte solution, it may be possible to achieve the lithium-sulfur battery with low electrolyte and high capacity.

For example, the lithium-sulfur battery may stably operate at an electrolyte/sulfur (El/S) ratio of, for example, 7 *µ*ℓ/mg or less, specifically 5 *µ*ℓ/mg or less, but the present disclosure is not limited thereto. In particular, because the lithium-sulfur battery aims at achieving low electrolyte and high capacity, when the above-described electrolyte solution is used, the battery with higher El/S ratio than the aforementioned El/S ratio may operate and exhibit high performance at the aforementioned El/S ratio, and the El/S ratio is not limited thereto.

According to an embodiment of the present disclosure, the El/S ratio the lithium-sulfur battery may be, for example, from 2 µℓ/mg to 7 *µ*ℓ/mg, from 3 µℓ/mg to 5 *µ*ℓ/mg, from 4 µℓ/mg to 5 *µ*ℓ/mg, from 2 µℓ/mg to 5 *µ*ℓ/mg, from 2 µℓ/mg to 3 *µ*ℓ/mg, or from 2 µℓ/mg to 2.5 *µ*ℓ/mg, but the present disclosure is not limited thereto.

Hereinafter, examples will be described in detail to help the understanding of the present disclosure.

### Experimental Example 1

### [Preparation of electrolyte solution for lithium-sulfur battery]

To identify the performance improvement of a lithium-sulfur battery when an electrolyte solution for the lithium-sulfur battery includes a Lewis acidic additive, the electrolyte solution of the composition of TABLE 1 was prepared.

Specifically, to evaluate the performance with the electrolyte solution including 2-methylfuran (2-MeF), bis(2,2,2-trifluoroethyl)ether (BTFE) or 1,1,2,2-tetrafluoroethyl-2,2,3,3-tetrafluoropropyl ether (TTE) as a nonsolvent for lithium polysulfide, electrolyte solutions of Comparative Example 2 to Comparative Example 4 were prepared.

**[TABLE 1]**

| | Lithium salt | Nitric acid compound | Nonaqueous solvent | Lewis acidic additive |
|---|---|---|---|---|
| Comparative Example 1 | LiFSI 0.75 M | LiNO₃ 0.4 M | DME | - |
| Comparative Example 2 | LiFSI 0.75 M | LiNO₃ 0.4 M | DME:2-MeF (5:1 v/v) | - |
| Comparative Example 3 | LiFSI 0.75 M | LiNO₃ 0.4 M | DME:BTFE (5:1 v/v) | - |
| Comparative Example 4 | LiFSI 0.75 M | LiNO₃ 0.4 M | DME:TTE (5:1 v/v) | - |
| Comparative Example 5 | LiFSI 2 M | LiNO₃ 0.4 M | DME | Ca(OTf)₂ 0.05M |
| Comparative Example 6 | LiFSI 3 M | LiNO₃ 0.4 M | DME | Ca(OTf)₂ 0.05M |
| Example 1 | LiFSI 0.75 M | LiNO₃ 0.4 M | DME | Ca(OTf)₂ 0.05M |
| Example 2 | LiFSI 0.75 M | LiNO₃ 0.4 M | DME | Ca(OTf)₂ 0.1M |
| Example 3 | LiFSI 1.5 M | LiNO₃ 0.4 M | DME | Ca(OTf)₂ 0.05M |
| * DME: dimethoxyethane | | | | |

### Evaluation Example 1. Evaluation of solubility of lithium polysulfide

To evaluate the suppression performance of lithium polysulfide dissolution by the Lewis acidic additive, an experiment was performed as follows.

The electrolyte solution was added dropwise until the same amount of lithium polysulfide (Li₂S₈) was completely dissolved at room temperature of 23°C using the electrolyte solutions of Comparative Example 1 and Example 1. The concentration of the experimental solution was measured at the time when lithium polysulfide in initial solid state was not observed anymore, and the results are shown in TABLE 2 below.

**[TABLE 2]**

| | Concentration of experimental solution |
|---|---|
| Comparative Example 1 | 0.4 M Li₂S₈ |
| Example 1 | 0.075 M Li₂S₈ |

As can be seen from the above TABLE 2, it was confirmed that the electrolyte solution of Example 1 was used in a larger amount than the electrolyte solution of Comparative Example 1 to dissolve the same amount of lithium polysulfide, and accordingly the final concentration of the experimental solution was lower.

Through this, it was confirmed that the dissolution of lithium polysulfide in the electrolyte solution was suppressed by the Lewis acidic additive, thereby suppressing the leakage of lithium polysulfide into the electrolyte solution.

### [Manufacture of lithium-sulfur battery]

A lithium-sulfur battery was manufactured using the electrolyte solution prepared as described above.

A positive electrode slurry was applied to an aluminum foil using a sulfur-carbon composite (S/C 70/30) and an acrylic acid (PAA) binder, and dried to prepare a positive electrode (sulfur content 45 wt% based on the total weight of the positive electrode). A 35 *µ*m thick lithium metal foil was used as a negative electrode. A porous polyethylene was used as a separator. The separator was placed between the positive electrode and the negative electrode as prepared, and the as-prepared electrolyte solution was injected to fabricate a pouch cell.

The electrolyte solution of each of Comparative Example 1 to Comparative Example 6 and Example 1 to Example 3 was used as the electrolyte solution, and injected according to a target El/S ratio (unit: *µ*ℓ/mg).

### Evaluation Example 2. Life evaluation of battery

A battery was manufactured using the electrolyte solution of each of Comparative Example 1, Example 1 and Example 2 with the El/S ratio of 5 *µ*ℓ/mg.

Subsequently, the as-prepared lithium-sulfur battery was discharged at 0.3C to 1.8 V in a CC mode at 25°C and charged with a 0.3 C constant current to 2.7 V, and a discharge capacity was measured/compared. The discharge capacity was measured based on the sulfur content (mAh/g (sulfur weight)).

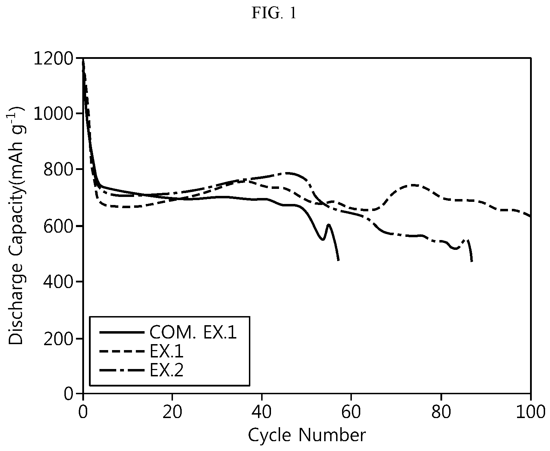

The measurement results are shown in FIG. 1.

According to the results of FIG. 1, it was confirmed that the electrolyte solution including the Lewis acidic additive ensured operational stability of the battery in the lean electrolyte and high sulfur loading (El/S 5 *µ*ℓ/mg) environment. In particular, it was confirmed that the electrolyte solution of Example 1 ensured operational stability up to 100 cycles.

### Evaluation Example 3. Rate evaluation of battery

A battery was manufactured using the electrolyte solution of each of Comparative Example 1 to Comparative Example 4 and Example 1 and Example 2 with the El/S ratio of 4 *µ*ℓ/mg.

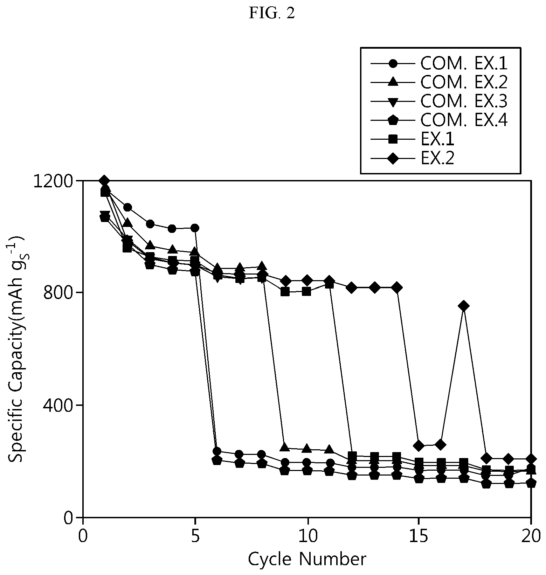

The charge/discharge characteristics were evaluated by the same method as Evaluation Example 2, and the results are shown in FIG. 2.

The electrolyte solution (Comparative Example 2 to Comparative Example 4) including the nonsolvent for lithium polysulfide was expected to reduce the amount of lithium polysulfide dissolved in the electrolyte solution by the introduction of the nonsolvent, but according to the results of FIG. 2, it was confirmed that the maximum current density that leads to the discharge capacity of 800 mAh/gₛ or more was lower than those of Examples 1 and 2. In particular, it was confirmed that the maximum current density was about half of Example 2. In contrast, in the case of Examples 1 and 2, it was confirmed that the introduction of the Lewis acidic additive could suppress dissolution of lithium polysulfide and improve lithium ion mobility.

### Evaluation Example 4. Elemental evaluation of SEI layer of negative electrode

After 5 cycles of the lithium-sulfur battery using Comparative Example 1 and Example 1 prepared in Evaluation Example 2, the negative electrode was separated, and elemental analysis of the SEI layer on the negative electrode was performed through molecular dynamics (MD) and X-ray photoelectron spectroscopy (XPS) analysis.

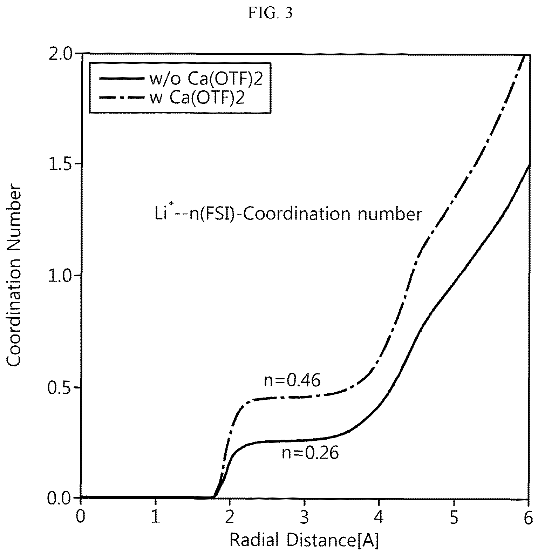

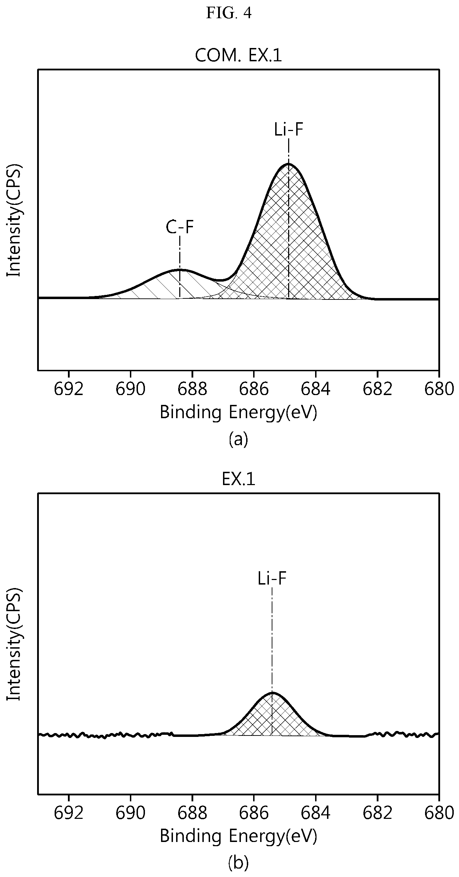

The elemental analysis results are shown in each of FIGs. 3 and 4.

According to the results of FIG. 3, it was confirmed that the coordination number of the lithium ion (Li⁺) and FSI⁻ increased when the Lewis acidic additive was introduced. LiF in the SEI layer produced by the decomposition of FSI⁻ reduces the loss of bulk lithium and electrolyte, leading to improved life performance of the battery. While the coordination number of FSI⁻ increased, according to the results of FIG. 4, the decomposition of FSI⁻decreased, implying that the introduction of the Lewis acidic additive induced the formation of the stable SEI layer and prevented excessive decomposition of the electrolyte solution, thereby improving the battery performance.

### Evaluation Example 5. Evaluation of decomposition current of electrolyte solution

The decomposition current was evaluated by the following method for each of the electrolyte solutions of Comparative Example 1 and Example 1.

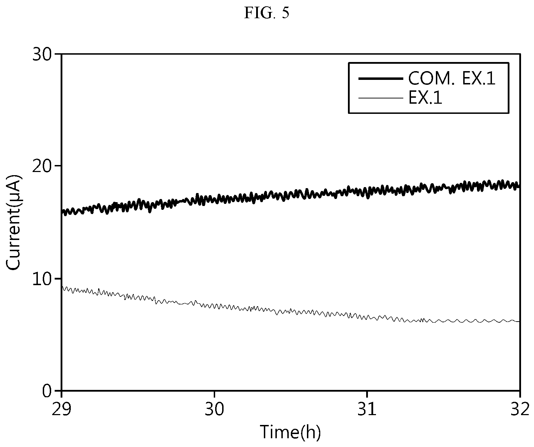

First, voltage was fixed to 2.3 V during charge of the lithium-sulfur battery using Comparative Example 1 and Example 1 prepared in Evaluation Example 2, and the electric current produced by the shuttle of lithium polysulfide to the negative electrode was measured, and the results are shown in FIG. 5.

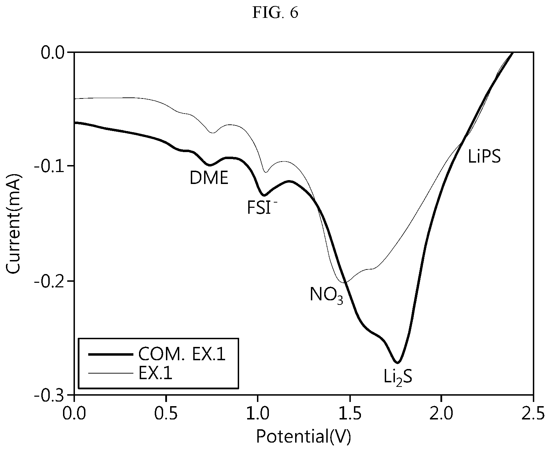

Subsequently, a lithium-nickel battery was prepared using the as-prepared electrolyte solution of each of Comparative Example 1 and Example 1, and 1.6M of lithium polysulfide (LiPS) was injected into the electrolyte solution to create a similar condition to the electrolyte solution during discharge of the lithium-sulfur battery. FIG. 6 shows a voltage-current graph obtained by Linear Sweep Voltammetry (LSV) in the voltage range between OCV and 0.05 V at the scan rate of 1 mV/s using the as-prepared lithium-nickel battery.

According to the results of FIGs. 5 and 6, it was confirmed that the shuttle current of Example 1 was much lower than Comparative Example 1 by the Lewis acidic additive. Additionally, it was confirmed that in the case of Example 1 including the Lewis acidic additive, reduction reaction of LiPS to Li₂S was greatly suppressed.

Through this, it was confirmed that the Lewis acidic additive may reduce the loss of the positive electrode active material caused by the shuttle effect during the operation of the lithium-sulfur battery and prevent the electrolyte decomposition issue raised at low electrolyte, thereby achieving longer life of the lithium-sulfur battery.

### Evaluation Example 6. Life evaluation of battery

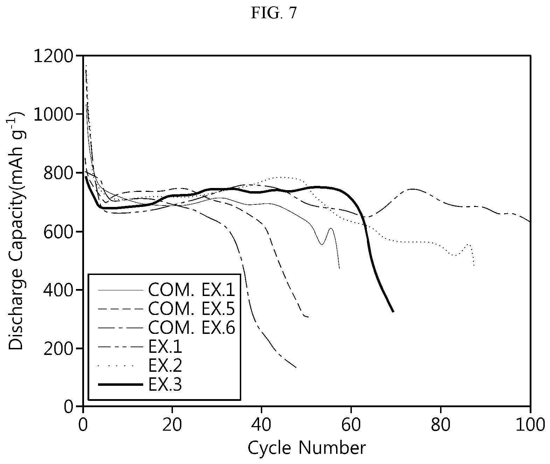

To evaluate the influence on battery life at varying concentrations of the lithium salt while keeping the amount of the Lewis acidic additive unchanged, battery life was evaluated by the same method as Evaluation Example 2 using the electrolyte solution of each of Comparative Example 1, Comparative Example 5, Comparative Example 6, and Example 1 to Example 3, and the results are shown in FIG. 7.

Referring to FIG. 7, it was confirmed that Example 1 to Example 3 in which the Lewis acidic additive according to an embodiment of the present disclosure was used, and the total concentration of the lithium salt, the nitric acid compound and the acidic additive was 2 M or less showed higher performance than Comparative Example 1 that did not include the acidic additive, while Comparative Example 5 and Comparative Example 6 in which the Lewis acidic additive was included but the total concentration of the lithium salt, the nitric acid compound and the acidic additive was 2 M or more had shorter life than Comparative Example 1 that did not include the acidic additive.

Through this, it was confirmed that the acidic additive was effect in improving the life of the lithium-sulfur battery in the condition that the total concentration of the lithium salt, the nitric acid compound and the acidic additive was 2 M or less.

### Experimental Example 2

### [Preparation of electrolyte solution for lithium-sulfur battery]

To identify the performance improvement of a lithium-sulfur battery as a function of composition when an electrolyte solution for the lithium-sulfur battery includes a Lewis acidic additive, the electrolyte solution was prepared according to the composition of TABLE 3 below.

**[TABLE 3]**

| | Lithium salt | Nitric acid compound | Nonaqueous solvent | Lewis acidic additive |
|---|---|---|---|---|
| Example 4 | LiFSI 0.5 M | LiNO₃ 0.73 M | DME:2-MeF (4:1 v/v) | Ca(OTf)₂ 0.1M |
| Example 5 | LiFSI 0.5 M | LiNO₃ 0.73 M | DME:2-MeF (4:1 v/v) | Ca(OTf)₂ 0.5M |
| Comparative Example 7 | LiFSI 0.5 M | LiNO₃ 0.73 M | DME:2-MeF (4:1 v/v) | - |
| Comparative Example 8 | LiFSI 0.5 M | - | DME:2-MeF (4:1 v/v) | Ca(OTf)₂ 0.1M |
| * DME: dimethoxyethane | | | | |

### [Manufacture of lithium-sulfur battery]

A lithium-sulfur battery was manufactured using the electrolyte solution having the composition of TABLE 3 as follows.

A positive electrode flurry was applied to an aluminum foil using a sulfur-carbon composite (S/C 70/30) and an acrylic acid (PAA) binder and dried to prepare a positive electrode (sulfur content 45 wt% based on the total weight of the positive electrode). A 35 *µ*m thick lithium metal foil was used as the negative electrode. A porous polyethylene was applied as the separator. The separator was placed between the positive electrode and the negative electrode as prepared, and the as-prepared electrolyte solution was injected to fabricate a pouch cell.

The electrolyte solution of each of Example 4, Example 5, Comparative Example 7 or Comparative Example 8 was used as the electrolyte solution, and injected at an El/S ratio (unit: *µ*ℓ/mg) of 2.4.

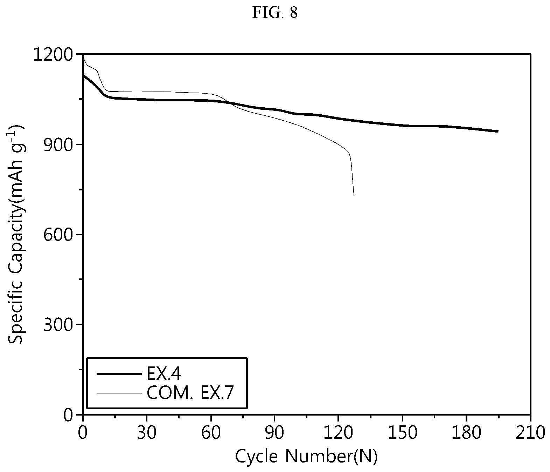

Subsequently, the lithium-sulfur battery was discharged at 0.3C to 1.8 V in a CC mode at 25°C and charged with 0.3C constant current to 2.7 V to evaluate charge/discharge characteristics and the results are shown in FIGs. 8 to 10. Each capacity was measured based on the sulfur content (mAh/g (sulfur weight)).

FIG. 8 shows specific capacity evaluation results as a function of charge/discharge cycle. In the same way as the previous results, it was confirmed that the Lewis acidic additive included dramatically suppressed capacity fading over repeated charge/discharge cycles.

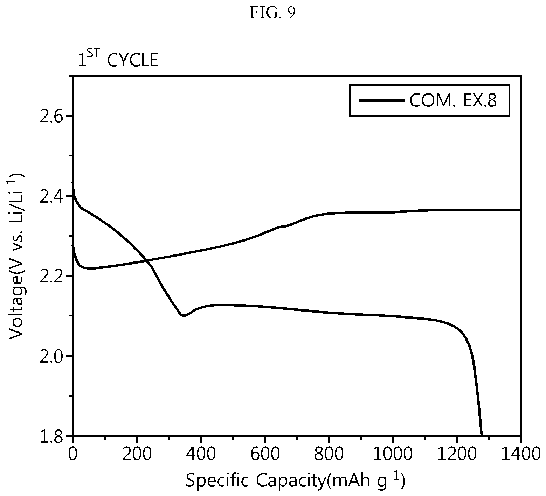

FIG. 9 shows a charge/discharge curve of the first charge/discharge cycle in the lithium-sulfur battery using the electrolyte solution of Comparative Example 8. Referring to FIG. 9, it was confirmed that when the electrolyte solution composition included the Lewis acidic additive but not the nitric acid compound additive, subsequent normal cycles were impossible due to delayed charging.

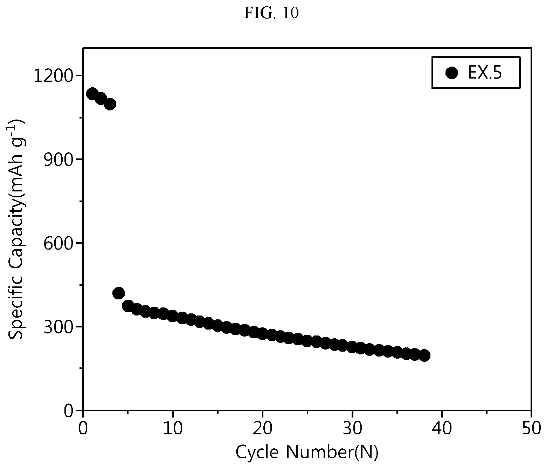

FIG. 10 shows specific capacity evaluation results as a function of charge/discharge cycle in the lithium-sulfur battery using the electrolyte solution of Example 5. Referring to FIG. 10, it was confirmed that when the Lewis acidic additive was used in excess, the subsequent cycles were impossible due to a rapid rise in discharge overvoltage at the early cycles.

## Claims

1. An electrolyte solution for a lithium-sulfur battery comprising:
a lithium salt, a nitric acid compound, a nonaqueous solvent and a Lewis acidic additive,
wherein the Lewis acidic additive is a salt including a cation having higher Lewis acidity than a lithium ion (Li⁺), and
wherein a total concentration of the lithium salt, the nitric acid compound and the Lewis acidic additive is 2 M or less.

2. The electrolyte solution for the lithium-sulfur battery according to claim 1, wherein the total concentration of the lithium salt, the nitric acid compound and the Lewis acidic additive is 1.5 M or less.

3. The electrolyte solution for the lithium-sulfur battery according to claim 1, wherein the Lewis acidic additive includes, as the cation, an aluminum (Al) ion, a magnesium (Mg) ion, a calcium (Ca) ion, a strontium (Sr) ion, a barium (Ba) ion or two or more of them.

4. The electrolyte solution for the lithium-sulfur battery according to claim 1, wherein the Lewis acidic additive includes a calcium salt.

5. The electrolyte solution for the lithium-sulfur battery according to claim 1, wherein the Lewis acidic additive includes an anion including fluorine.

6. The electrolyte solution for the lithium-sulfur battery according to claim 1, wherein the Lewis acidic additive includes, as an anion, F⁻, BF₄⁻, PF₆⁻, CF₃SO₃⁻, [(CF₃SO₂)₂N]⁻, [(FSO₂)₂N]⁻ or two or more of them.

7. The electrolyte solution for the lithium-sulfur battery according to claim 1, wherein a concentration of the lithium salt in the electrolyte solution for the lithium-sulfur battery is 2 M or less.

8. The electrolyte solution for the lithium-sulfur battery according to claim 1, wherein a concentration of the Lewis acidic additive in the electrolyte solution for the lithium-sulfur battery is 0.3 M or less.

9. The electrolyte solution for the lithium-sulfur battery according to claim 1, wherein a concentration of the Lewis acidic additive in the electrolyte solution for the lithium-sulfur battery is from 0.01 M to 0.1 M.

10. The electrolyte solution for the lithium-sulfur battery according to claim 1, wherein the nonaqueous solvent includes an ether-based solvent.

11. The electrolyte solution for the lithium-sulfur battery according to claim 1, wherein the nonaqueous solvent includes an ether-based solvent, and
wherein a volume of the ether-based solvent is 60 vol% or more of a total volume of the nonaqueous solvent.

12. The electrolyte solution for the lithium-sulfur battery according to claim 1, wherein the nonaqueous solvent consists of one type of ether-based solvent.

13. The electrolyte solution for the lithium-sulfur battery according to claim 1, wherein the nonaqueous solvent includes a cyclic ether and an acyclic ether.

14. A lithium-sulfur battery comprising:
the electrolyte solution according to any one of claims 1 to 13;
a positive electrode including inorganic sulfur (S₈);
a negative electrode; and
a separator between the positive electrode and the negative electrode.

15. The lithium-sulfur battery according to claim 14, wherein the lithium-sulfur battery has a solid electrolyte interphase (SEI) layer comprising LiF on the negative electrode.

16. The lithium-sulfur battery according to claim 14, wherein an electrolyte/sulfur (El/S) ratio is 7 *µ*ℓ/mg or less.
